# EUROPEAN PATENT APPLICATION

(11) **EP 4 819 341 A1**
(43) Date of publication of application: **07.10.2026**
(21) Application number: 23960476.2
(22) Date of filing: 05.12.2023
(51) Int. Cl.: H01M 50/30

(54) **BATTERY CELL, BATTERY, ELECTRIC DEVICE AND ENERGY STORAGE DEVICE**

(71) Applicant: Contemporary Amperex Technology Co., Limited, Ningde, Fujian 352100 (CN)
(72) Inventor: XING, Chengyou, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Kraus & Lederer PartGmbB
(86) International application number: PCT/CN2023/136572
(87) International publication number: WO 2025/118162

(57) **Abstract**

This disclosure relates to the field of battery technologies and discloses a battery cell (0114), a battery (011), an electric apparatus, and an energy storage apparatus. The battery cell (0114) includes a housing (1), a cell (2), and a ventilation assembly (3). The housing (1) has an accommodating cavity (11). The housing (1) includes a first wall (12). The first wall (12) is provided with a first gas discharge channel. The cell (2) is disposed in the accommodating cavity (11). The ventilation assembly (3) is mounted on the first wall (12) and covers the first gas discharge channel. The ventilation assembly (3) includes a connecting member (31) and a ventilation film (32). The connecting member (31) is provided with at least one through hole (311). The ventilation film (32) covers the through hole(s) (311).

## Description

### TECHNICAL FIELD

This disclosure relates to the field of battery technologies, and in particular, to a battery cell, a battery, an electric apparatus, and an energy storage apparatus.

### BACKGROUND

New energy batteries are increasingly widely used in daily life and industries. For example, new energy vehicles equipped with batteries have been widely used. In addition, batteries are also increasingly used in energy storage and other fields.

During the use of a battery cell, when external air pressure, external temperature, or temperature of the battery cell changes, the air pressure inside the battery cell and the air pressure of the external environment will become unbalanced; and during the use of the battery cell, a specific amount of gas will also be slowly generated.

The foregoing reasons may lead to low reliability of the battery cell and reduce the service life of the battery cell.

### SUMMARY

In view of this, this disclosure provides a battery cell, a battery, an electric apparatus, and an energy storage apparatus, so as to improve the reliability of the battery cell and prolong the service life of the battery cell.

This disclosure is implemented using the following technical solutions.

A first aspect of this disclosure provides a battery cell. The battery cell includes a housing, a cell, and a ventilation assembly. The housing has an accommodating cavity, and the housing includes a first wall, where the first wall is provided with a first exhaust passage. The cell is disposed in the accommodating cavity. The ventilation assembly is mounted on the first wall and covers the first exhaust passage. The ventilation assembly includes a connecting member and a ventilation film. The connecting member is provided with at least one through hole, and the ventilation film covers the through hole(s).

In the battery cell provided in embodiments of this disclosure, the first exhaust passage is provided on the first wall of the housing, and the ventilation assembly is mounted on the first wall and covers the first exhaust passage, so that gas in the accommodating cavity is in communication with an external environment through the first exhaust passage, the connecting member, and the ventilation film, thereby allowing the first exhaust passage, the connecting member, and the ventilation film to form a gas flow channel, maintaining a balance between a pressure in the accommodating cavity and a pressure of the external environment, and reducing the risk of deformation (such as bulging deformation or concave deformation) of the housing. In this way, gas generated by the consumption of an electrolyte can also be discharged out of the battery cell in time; and in addition, for the housing provided with an explosion-proof valve, the risk of the explosion-proof valve opening in advance can also be reduced. Therefore, through the foregoing arrangement, the battery cell provided in the embodiments of this disclosure can improve the reliability of the battery cell and prolong the service life of the battery cell.

In a possible implementation of this disclosure, the ventilation assembly is disposed on a side of the first exhaust passage closer to the accommodating cavity, and the ventilation film is disposed on a side of the connecting member closer to the accommodating cavity.

In a possible implementation of this disclosure, the first wall is provided with a communication groove on a side closer to the accommodating cavity, the communication groove communicates with the first exhaust passage and the accommodating cavity, and the ventilation assembly is mounted in the communication groove.

In a possible implementation of this disclosure, the communication groove is a stepped groove provided on a side of the first wall closer to the accommodating cavity, the ventilation assembly is mounted in the stepped groove, a flow gap is present between the ventilation assembly and a surface of the first wall opposite the ventilation assembly, and the through hole communicates with the first exhaust passage through the flow gap.

In a possible implementation of this disclosure, all the through holes are staggered with the first exhaust passage.

In a possible implementation of this disclosure, the stepped groove includes a mounting groove and a first stepped groove, the first stepped groove is located on a side of the mounting groove farther away from the accommodating cavity, a radial size of the first stepped groove is smaller than a radial size of the mounting groove, the connecting member is mounted in the mounting groove, the ventilation film is located on a side of the connecting member closer to the accommodating cavity, and the through hole and the first exhaust passage communicate with each other through a space in the first stepped groove.

In a possible implementation of this disclosure, the stepped groove includes a mounting groove and a second stepped groove, the second stepped groove is located on a side of the mounting groove closer to the accommodating cavity, a radial size of the second stepped groove is larger than a radial size of the mounting groove, the connecting member is mounted in the mounting groove, and the ventilation film is located in a space formed by the second stepped groove.

In a possible implementation of this disclosure, the connecting member and the mounting groove are connected by welding, and a weld joint between the connecting member and the mounting groove is accommodated in the second stepped groove.

In a possible implementation of this disclosure, a plurality of through holes are provided, and the plurality of through holes are evenly spaced apart on the connecting member.

In a possible implementation of this disclosure, the battery cell further includes a protection sheet, the protection sheet is mounted on a side of the first wall farther away from the accommodating cavity and shields the first exhaust passage; and a communication channel is formed on a side of the protection sheet facing the first wall, one end of the communication channel communicates with the first exhaust passage, and the other end of the communication channel is staggered with the first exhaust passage and communicates with an external environment.

In a possible implementation of this disclosure, a contour of the protection sheet matches a contour of the first wall in shape.

In a possible implementation of this disclosure, the protection sheet is provided with an adhesive layer on a surface on a side closer to the first wall, the adhesive layer includes an avoidance region, and the avoidance region forms the communication channel.

In a possible implementation of this disclosure, the protection sheet is provided with a discharge hole, the discharge hole is staggered with the first exhaust passage, and the first exhaust passage communicates with the discharge hole through the communication channel.

In a possible implementation of this disclosure, the discharge hole is a sampling hole.

In a possible implementation of this disclosure, the housing further includes a peripheral wall, and a circumferential edge of the first wall is connected to the peripheral wall; and the battery cell further includes a housing insulation film located on an outer surface of the housing, the housing insulation film includes a main body portion and a connecting flange, the main body portion covers a surface of the peripheral wall on a side farther away from the accommodating cavity, and the connecting flange is connected to the main body portion and covers an edge on a side of the protection sheet farther away from the accommodating cavity.

In a possible implementation of this disclosure, the discharge hole is disposed at a middle position of the protection sheet in a thickness direction of the battery cell, and the first exhaust passage is located on a side of the discharge hole in the thickness direction of the battery cell.

In a possible implementation of this disclosure, the battery cell further includes an insulation pad, the insulation pad is disposed between the first wall and the cell, the insulation pad is provided with a second exhaust passage, the ventilation assembly is disposed between the first wall and the insulation pad, the second exhaust passage communicates with the ventilation assembly, and the ventilation film and the insulation pad are spaced apart from each other.

In a possible implementation of this disclosure, the first exhaust passage and the second exhaust passage are staggered with each other.

In a possible implementation of this disclosure, the through hole is arranged opposite the second exhaust passage to communicate with the second exhaust passage.

In a possible implementation of this disclosure, the through hole is staggered with the second exhaust passage, and the through hole communicates with the second exhaust passage.

In a possible implementation of this disclosure, gas in the accommodating cavity is in communication with an external environment through the first exhaust passage, the connecting member, and the ventilation film.

In a possible implementation of this disclosure, the housing is further provided with an explosion-proof valve, and under a condition that a pressure of the gas in the accommodating cavity is greater than a preset threshold, the gas in the accommodating cavity is discharged through the explosion-proof valve.

A second aspect of this disclosure provides a battery, where the battery includes the battery cell according to any one of the implementations of the first aspect.

A third aspect of this disclosure provides an electric apparatus, where the electric apparatus includes the battery cell according to any one of the implementations of the first aspect or the battery according to the second aspect.

A fourth aspect of this disclosure provides an energy storage apparatus, where the energy storage apparatus includes the battery cell according to any one of the implementations of the first aspect or the battery according to the second aspect.

The battery, the electric apparatus, or the energy storage apparatus provided in the embodiments of this disclosure includes the battery cell according to any one of the implementations of the first aspect, and therefore has the same technical effects and has high reliability and long service life.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this disclosure. Moreover, throughout the accompanying drawings, the same reference signs represent the same parts. In the drawings:
FIG. 1 is a schematic structural diagram of a vehicle according to some embodiments of this disclosure;
FIG. 2 is a schematic three-dimensional exploded view of a battery according to some embodiments of this disclosure;
FIG. 3 is a schematic overall structural diagram of a battery cell according to some embodiments of this disclosure;
FIG. 4 is a schematic exploded view of a battery cell according to some embodiments of this disclosure;
FIG. 5 is a schematic assembly view of a first wall and an insulation pad of a battery cell according to some embodiments of this disclosure;
FIG. 6 is a schematic exploded view of a first wall and an insulation pad of a battery cell according to some embodiments of this disclosure;
FIG. 7 is an enlarged schematic view of a first exhaust passage, a second exhaust passage, and a ventilation assembly of a battery cell according to some embodiments of this disclosure;
FIG. 8 is an enlarged schematic view of a first exhaust passage, a second exhaust passage, and a ventilation assembly of a battery cell according to some embodiments of this disclosure;
FIG. 9 is an enlarged schematic view of a first exhaust passage, a second exhaust passage, and a ventilation assembly of a battery cell according to some embodiments of this disclosure;
FIG. 10 is a schematic diagram of arrangement of a protection sheet of a battery cell according to some embodiments of this disclosure;
FIG. 11 is a schematic diagram of arrangement of a protection sheet of a battery cell according to some embodiments of this disclosure;
FIG. 12 is a schematic diagram of arrangement of a protection sheet of a battery cell according to some embodiments of this disclosure; and
FIG. 13 is a schematic diagram of arrangement of a protection sheet of a battery cell according to some embodiments of this disclosure.

### Description of reference signs

01. vehicle; 011. battery; 0111. battery bottom plate; 0112. battery cover plate; 0113. battery vertical plate; 0114. battery cell; 012. controller; 013. motor; 1. housing; 11. accommodating cavity; 12. first wall; 121. first exhaust passage; 122. terminal mounting hole; 1221. terminal; 1222. terminal sealing ring; 123. electrolyte injection hole; 1231. sealing peg; 124. communication groove; 1241. stepped groove; 12411. mounting groove; 12412. first stepped groove; 12413. second stepped groove; 13. housing insulation film; 131. main body portion; 132. connecting flange; 14. explosion-proof valve mounting hole; 15. peripheral wall; 2. cell; 21. cell insulation film; 3. ventilation assembly; 31. connecting member; 311. through hole; 312. weld joint; 32. ventilation film; 4. explosion-proof valve; 41. explosion-proof diaphragm; 5. insulation pad; 51. second exhaust passage; 6. protection sheet; 61. communication channel; 62. sampling hole; 63. terminal avoidance hole; 64. electrolyte injection avoidance hole; 65. explosion-proof valve avoidance hole; 66. connection region; 67. avoidance region; and 68. discharge hole.

### DESCRIPTION OF EMBODIMENTS

The following describes in detail the embodiments of technical solutions of this disclosure with reference to the accompanying drawings. The following embodiments are merely used to describe technical solutions of this disclosure more explicitly, and therefore they are merely used as examples and do not constitute any limitations on the protection scope of this disclosure.

Unless otherwise defined, all technical and scientific terms used herein shall have the same meanings as commonly understood by those skilled in the art to which this disclosure relates. The terms used herein are intended to merely describe the specific embodiments rather than to limit this disclosure. The terms "include", "comprise", "have", and any other variations thereof in the specification, claims and brief description of drawings of this disclosure are intended to cover non-exclusive inclusions.

In the description of the embodiments of this disclosure, the technical terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means at least two unless otherwise specifically stated.

In this specification, reference to "embodiment" means that specific features, structures or characteristics described with reference to the embodiment may be incorporated in at least one embodiment of this disclosure. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this disclosure, the orientations or positional relationships indicated by the technical terms "length", "width", "thickness", "upper", "lower", "front", "rear", "left", "right", "vertical", "horizontal", "top", "bottom", "inside", "outside", "circumferential", and the like are based on the orientations or positional relationships as shown in the accompanying drawings. These terms are merely for ease and brevity of description of the embodiments of this disclosure rather than indicating or implying that the apparatuses or components mentioned must have specific orientations or must be constructed or manipulated according to specific orientations, and therefore shall not be construed as any limitations on embodiments of this disclosure.

In the description of the embodiments of this disclosure, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this disclosure as appropriate to specific situations.

In the description of the embodiments of this disclosure, unless otherwise specified and defined explicitly, the technical term "contact" should be understood in a broad sense. It may be direct contact or contact through an intermediate medium layer. It may be contact between two contacting parties with basically no interaction force, or contact between two contacting parties with interaction force.

The following describes this disclosure in detail.

Currently, new energy batteries are increasingly widely used in daily life and industries. New energy batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, and aerospace. With the continuous expansion of application fields of traction batteries, market demands for traction batteries are also increasing.

In many application scenarios, a plurality of battery cells may be arranged and combined to form a battery pack for use, which can increase the capacity of the battery pack. Generally speaking, for ease of description, the battery in the embodiments of this disclosure may generally refer to a battery pack or a battery module.

It should be noted that the battery in the embodiments of this disclosure may be used without limitation in electric apparatuses such as energy storage power supply systems, vehicles, ships, or aircrafts. Moreover, the battery pack or battery module is formed by arranging a plurality of grouped battery cells in a sealed box, thereby featuring more reliable dustproof and waterproof performance, and therefore can be applied to scenarios with more harsh, humid, or even submerged use environments.

The embodiments of this disclosure provide an electric apparatus including the foregoing battery or battery pack for providing electrical energy. The electric apparatus may be but is not limited to a mobile phone, a tablet, a laptop computer, an electric toy, an electric tool, an electric bicycle, an electric car, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this disclosure being a vehicle 01 is used as an example for description of the following embodiments. The description is made below with reference to the accompanying drawings.

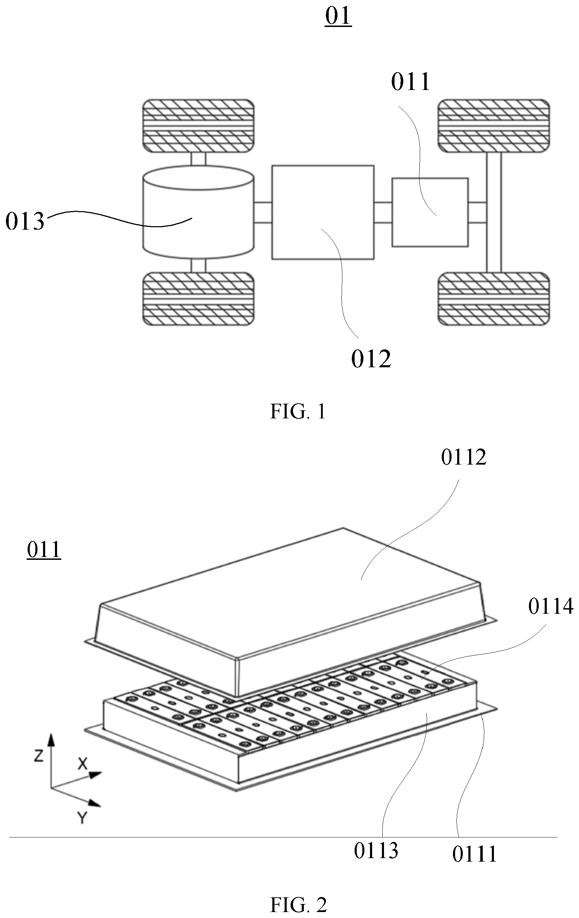

FIG. 1 is a schematic structural diagram of a vehicle 01 according to some embodiments of this disclosure. The vehicle 01 may be a fossil fuel vehicle, a natural gas vehicle, or a new energy vehicle. The new energy vehicle may be a battery electric vehicle, a hybrid electric vehicle, a range-extended electric vehicle, or the like. As shown in FIG. 1, the vehicle 01 is provided with a battery 011 inside, where the battery 011 may be disposed at the bottom, front or rear of the vehicle 01. The battery 011 may be configured to supply power to the vehicle 01. For example, the battery 011 may be used as an operational power source for the vehicle 01. The vehicle 01 may further include a controller 012 and a motor 013, where the controller 012 is configured to control the battery 011 to supply power to the motor 013, for example, to satisfy power needs of start, navigation, and driving of the vehicle 01.

In some embodiments of this disclosure, the battery 011 may be used as not only the operational power source for the vehicle 01 but also a driving power source for the vehicle 01, replacing or partially replacing fossil fuel or natural gas to provide driving traction for the vehicle 01.

FIG. 2 is a schematic three-dimensional exploded view of a battery 011 according to an embodiment of this disclosure. As shown in FIG. 2, the battery 011 includes a battery bottom plate 0111, a battery cover 0112, a battery vertical plate 0113, and at least one battery cell 0114. The battery cover 0112 covers the battery bottom plate 0111, thereby forming an accommodating space for the battery cell 0114 between the battery bottom plate 0111 and the battery cover 0112.

In the battery 011, a plurality of battery cells 0114 may be provided. The plurality of battery cells 0114 may be connected in series, in parallel, series-parallel, where being connected in series-parallel means a combination of series and parallel connections of the plurality of battery cells 0114. The plurality of battery cells 0114 may be directly connected in series, parallel, or series-parallel, and then an entirety of the plurality of battery cells 0114 is placed in the accommodating space formed by the battery bottom plate 0111 and the battery cover 0112. Certainly, the battery 011 may be formed by a plurality of battery cells 0114 being connected in series, parallel, or series-parallel first to form a battery module and then a plurality of battery modules being connected in series, parallel, or series-parallel to form an entirety which is accommodated in the accommodating space formed by the battery bottom plate 0111 and the battery cover 0112. The battery 011 may further include other structures. For example, the battery 011 may further include a busbar component configured to implement electrical connection between the plurality of battery cells 10.

In this embodiment of this disclosure, the battery cell may be a secondary battery. A secondary battery refers to a battery cell that can continue to be used after discharged because its active materials can be reactivated through recharging.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like. This is not limited in this embodiment of this disclosure.

Although not shown in the figure, the battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is sandwiched between the positive electrode and the negative electrode to prevent short circuits between the positive and negative electrodes and allow active ions to pass through.

In some embodiments, the electrode assembly is provided with tabs (not shown), and the tabs can lead current out of the electrode assembly. The tabs include a positive tab and a negative tab.

In some embodiments, the battery cell may include a housing. The housing is configured to package components like the electrode assembly and electrolyte. The housing may be a steel, aluminum, plastic (such as polypropylene), or composite metal (such as copper-aluminum composite housing) shell, an aluminum-plastic film, or the like.

In an example, the battery cell may be a cylindrical battery cell, prismatic battery cell, pouch battery cell, or battery cell of another shape. Prismatic battery cells include square battery cells, blade battery cells, and multi-prismatic battery cells, and multi-prismatic battery cells are for example hexagonal battery cells. This is not particularly limited in this disclosure.

With the change of the use environment of the battery cell, such as under different external air pressures, or when different external temperatures and the temperature of the battery cell change, this will cause the air pressure inside the battery cell and the external air pressure to be unbalanced. Or during the use of the battery cell, as the electrolyte of the battery cell is gradually consumed, a specific amount of gas will also be generated, thereby increasing the air pressure inside the battery cell. The foregoing factors will pose risks to the integrity of the housing of the battery cell, which will lead to a decrease in the reliability of the battery cell and reduce the service life of the battery cell. For example, for a battery cell provided with an explosion-proof valve, the foregoing factors may cause the explosion-proof valve to open in advance and reduce the service life of the battery cell.

In view of this, the embodiments of this disclosure provide a battery cell, a battery, an electric apparatus, and an energy storage apparatus.

For ease of description, the electric apparatus of an embodiment of this disclosure being a vehicle 01 is used as an example for description of the following embodiments. The description is made below with reference to the accompanying drawings.

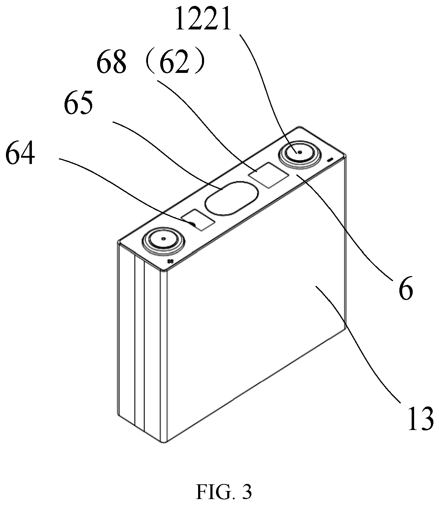

The following describes some embodiments of this disclosure in detail with reference to FIGs. 3 to 13.

Specifically, referring to FIGs. 3 to 9, a battery cell provided in the embodiments of this disclosure includes a housing 1, a cell 2, and a ventilation assembly 3. The housing 1 has an accommodating cavity 11, and the housing 1 includes a first wall 12, where the first wall 12 is provided with a first exhaust passage 121. The cell 2 is disposed in the accommodating cavity 11. The ventilation assembly 3 is mounted on the first wall 12 and covers the first exhaust passage 121. The ventilation assembly 3 includes a connecting member 31 and a ventilation film 32. The connecting member 31 is provided with at least one through hole 311. The ventilation film 32 covers the through hole(s) 311.

It should be noted that to vividly describe the battery cell in the embodiments of this disclosure, a prismatic battery cell is used as an example for description in the specification and the accompanying drawings thereof. It can be understood that for other types of battery cells, reference can also be made to the prismatic battery cell for understanding.

In the embodiments of this disclosure, a material of a main structure of the housing 1 is not limited. For example, the housing 1 may be configured as a steel shell, or the housing 1 may be configured as an aluminum shell. In addition, the materials of all parts of the housing 1 may be configured to be the same, or the materials of all parts of the housing 1 may be configured to be different. For example, part of the structure of the housing 1 may be set to a steel shell or an aluminum shell, and another part of the structure of the housing 1 may be set to plastic, or the like.

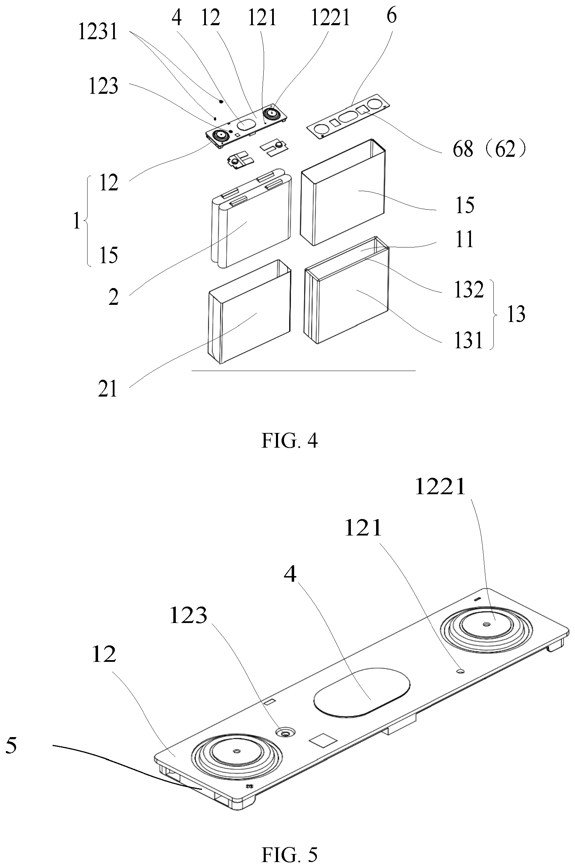

In addition, referring to FIGs. 3 and 4, to protect the cell 2, a cell insulation film 21 may be further provided on an outer surface of the cell 2; and to protect the battery cell, a housing insulation film 13 may be further provided on a surface of the housing 1.

It can be understood that in the embodiments of this disclosure, the housing 1 is configured to form the accommodating cavity 11, and the accommodating cavity 11 is configured to place the cell 2. The housing 1 may include multiple different walls. For example, referring to FIG. 3, for a prismatic battery cell, the housing 1 of the battery cell includes six side walls located opposite the upper, lower, left, right, front, and rear of the battery cell. In the embodiments of this disclosure, the first exhaust passage 121 may be provided on any one of the six side walls. In view of this, the side wall provided with the first exhaust passage 121 among the six side walls may be regarded as the first wall 12.

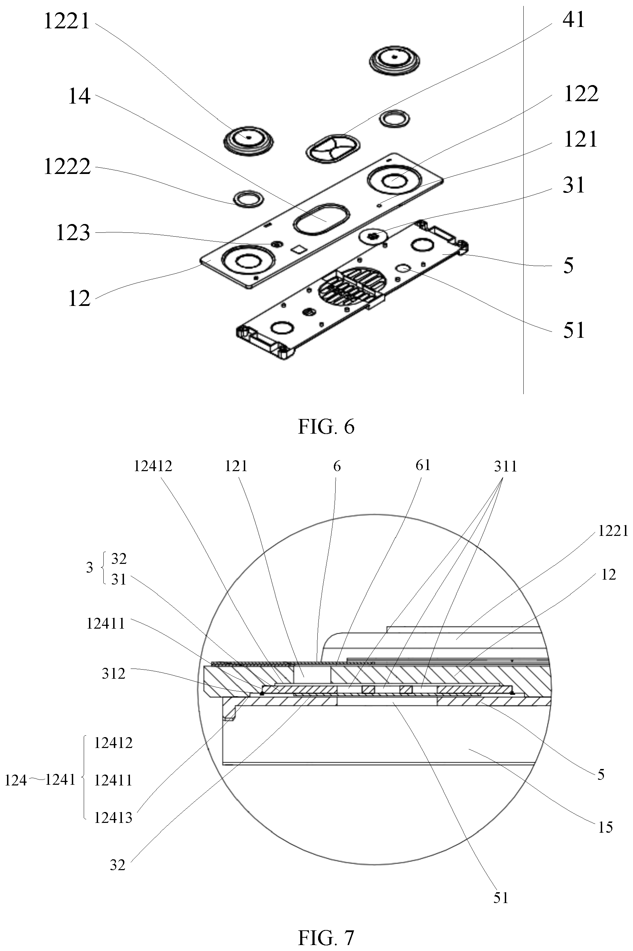

In addition, in the embodiments of this disclosure, a type of the first exhaust passage 121 is not limited either. For example, referring to FIGs. 7 to 9, the first exhaust passage 121 may be configured as a straight hole extending along a straight line and penetrating both sides of the first wall 12. In this way, the straight hole can be used as a discharge channel for gas in the accommodating cavity 11. In addition, the first exhaust passage 121 may alternatively be configured as a curved channel or various types of channels in the form of stepped grooves. In this way, the channels can also be used to form the first exhaust passage 121.

It can be understood that in the embodiments of this disclosure, a cross-section of the first exhaust passage 121 may be configured as a circle. In addition, the cross-section of the first exhaust passage 121 may alternatively be configured as other shapes. For example, the cross-section of the first exhaust passage 121 may be configured as rectangular or the like.

Further, in the embodiments of this disclosure, a specific structural form of the ventilation film 32 is not limited either. For example, the ventilation film 32 may be configured as a polymer porous structure. By adjusting the pore size of the porous structure, the ventilation film 32 can meet the purpose of allowing gaseous substances to pass through and isolating liquid substances. In this way, the ventilation film 32 can be used to reduce the risk of electrolyte leakage in the battery cell. In addition, the risk of external liquids (such as water) entering the interior of the battery cell and affecting the reliability of the cell 2 can also be reduced. Specifically, in some embodiments of this disclosure, the ventilation film 32 may be configured as a ventilation film 32 made of polytetrafluoroethylene.

It can be understood that in the embodiments of this disclosure, the connecting member 31 may be used as a mounting carrier for the ventilation film 32. The ventilation film 32 may be fixedly connected to the connecting member 31, and then the connecting member 31 is mounted to the first wall 12.

It should be noted that in the embodiments of this disclosure, a specific structural form of the connecting member 31 is not limited either. For example, referring to FIGs. 6 to 9, the connecting member 31 may be configured as a thin plate structure, and the through hole 311 is formed by providing a straight hole penetrating both sides of the thin plate structure on the thin plate structure.

In addition, it should be noted that in the embodiments of this disclosure, the number of through holes 311 may be set to one, or the number of through holes 311 may be set to two or more. This is not limited in the embodiments of this disclosure.

For example, referring to FIGs. 6 to 9, in some embodiments of this disclosure, a shape of the connecting member 31 may be configured as a circle, a plurality of through holes 311 may be provided, and the plurality of through holes 311 may be arranged evenly spaced apart at a middle position of the connecting member 31.

Further, sizes of the connecting member 31 and the ventilation film 32 being appropriately set allows the ventilation film 32 to cover all the through holes 311.

It should be noted that in the embodiments of this disclosure, the ventilation assembly 3 may be mounted on the first wall 12 corresponding to the first exhaust passage 121. Specifically, a position of the ventilation assembly 3 may be adjusted appropriately according to a position of the first exhaust passage 121 so that the ventilation assembly 3 covers the first exhaust passage 121. Further, in the embodiments of this disclosure, the ventilation assembly 3 may be mounted on a side of the first wall 12 farther away from the accommodating cavity 11 so that the ventilation assembly 3 covers an opening on a side of the first exhaust passage 121 farther away from the accommodating cavity 11. In addition, in the embodiments of this disclosure, the ventilation assembly 3 may alternatively be mounted on a side of the first wall 12 closer to the accommodating cavity 11 so that the ventilation assembly 3 covers an opening on a side of the first exhaust passage 121 closer to the accommodating cavity 11.

Further, in the embodiments of this disclosure, relative positions of the connecting member 31 and the ventilation film 32 are not limited either. For example, referring to FIGs. 7 to 9, the ventilation film 32 may be disposed on a side of the connecting member 31 closer to the accommodating cavity 11. In addition, the ventilation film 32 may alternatively be disposed on a side of the connecting member 31 farther away from the accommodating cavity 11.

With the foregoing arrangement, in the battery cell provided in the embodiments of this disclosure, the first exhaust passage 121 is provided on the first wall 12 of the housing 1, and the ventilation assembly 3 is mounted on the first wall 12 and covers the first exhaust passage 121, so that gas in the accommodating cavity 11 is in communication with an external environment through the first exhaust passage 121, the connecting member 31, and the ventilation film 32, thereby allowing the first exhaust passage 121, the connecting member 31, and the ventilation film 32 to form a gas flow channel, maintaining a balance between a pressure in the accommodating cavity 11 and a pressure of the external environment, and reducing the risk of deformation (such as bulging deformation or concave deformation) of the housing 1. In this way, gas generated by the consumption of an electrolyte can also be discharged out of the battery cell in time; an in addition, for the housing 1 provided with an explosion-proof valve 4, the risk of the explosion-proof valve 4 opening in advance can also be reduced. Therefore, through the foregoing arrangement, the battery cell provided in the embodiments of this disclosure can improve the reliability of the battery cell and prolong the service life of the battery cell.

On this basis, in the battery cell provided in the embodiments of this disclosure, the gas in the accommodating cavity 11 is in communication with the external environment through the first exhaust passage 121, the connecting member 31, and the ventilation film 32.

It can be understood that the external environment herein refers to an environment outside the battery cell. The gas in the accommodating cavity 11 being in communication with the external environment means that the gas in the accommodating cavity 11 is in communication with the external environment in real time. When the gas pressure in the accommodating cavity 11 is greater than the gas pressure of the external environment (for example, the gas pressure in the accommodating cavity 11 increases due to a temperature rise in the battery cell or a specific amount of gas is generated with the gradual consumption of the electrolyte, causing the gas pressure in the accommodating cavity 11 to increase), the gas in the accommodating cavity 11 can flow to the external environment through the first exhaust passage 121, the connecting member 31, and the ventilation film 32, thereby balancing the gas pressure in the accommodating cavity 11 with the gas pressure of the external environment. When the gas pressure in the accommodating cavity 11 is less than the gas pressure of the external environment, the gas of the external environment can also flow into the accommodating cavity 11 through the first exhaust passage 121, the connecting member 31, and the ventilation film 32, thereby balancing the gas pressure in the accommodating cavity 11 with the gas pressure of the external environment.

It should be noted that in some other embodiments of this disclosure, another structure may be further provided between the first wall 12 of the battery cell and the accommodating cavity 11, or another structure may be further provided on the side of the first wall 12 farther away from the accommodating cavity 11. In this way, a channel can be provided on the another structure to ultimately connect the accommodating cavity 11 to the external environment.

In this way, the gas in the accommodating cavity 11 can be in communication with the external environment through the first exhaust passage 121, the connecting member 31, the ventilation film 32, and the another channel.

With the foregoing arrangement, in the battery cell provided in the embodiments of this disclosure, the gas in the accommodating cavity 11 is in communication with the external environment through the first exhaust passage 121, the connecting member 31, and the ventilation film 32. This can further allow all media flowing through the through hole 311 to pass through the ventilation film 32, thereby enabling the ventilation film 32 to filter these media, and further protecting the cell 2.

In addition, referring to FIG. 6, in some embodiments of this disclosure, the housing 1 is further provided with an explosion-proof valve 4. When the pressure of the gas in the accommodating cavity 11 is greater than a preset threshold, the gas in the accommodating cavity 11 is discharged through the explosion-proof valve 4.

It can be understood that to facilitate the mounting of the explosion-proof valve 4 and to connect the explosion-proof valve 4 to the accommodating cavity 11, referring to FIG. 6, the housing 1 may be provided with an explosion-proof valve mounting hole 14 corresponding to the explosion-proof valve 4.

In addition, in some embodiments of this disclosure, the explosion-proof valve 4 may be made into a thin-sheet explosion-proof valve 4. Moreover, the explosion-proof valve 4 may alternatively be configured as a thimble-type explosion-proof valve 4, and a thinned area may be directly processed on the first wall 12 to serve as the explosion-proof valve 4.

For example, referring to FIG. 6, for a thin-sheet explosion-proof valve 4, the thin-sheet explosion-proof valve 4 includes an explosion-proof diaphragm 41. For the explosion-proof diaphragm 41, the explosion-proof diaphragm 41 has a burst pressure. When the pressure of the gas in the accommodating cavity 11 is greater than the burst pressure, the gas in the accommodating cavity 11 causes destruction of the explosion-proof diaphragm 41, thereby causing the gas in the accommodating cavity 11 to be discharged through the explosion-proof valve 4. For ease of description, the pressure value corresponding to the burst pressure that causes destruction of the explosion-proof valve 4 may be referred to as the preset threshold. Depending on a type or model of the selected explosion-proof valve 4, the preset threshold corresponding to the explosion-proof valve 4 may vary.

It should be noted that in the embodiments of this disclosure, the foregoing preset threshold is not limited. For example, in some embodiments of this disclosure, the preset threshold may be set to 0.9±0.2 MPa.

It can be understood that in the embodiments of this disclosure, the explosion-proof valve 4 is configured to quickly discharge the gas or liquid in the accommodating cavity 11 when the battery cell is in abnormal conditions (for example, extreme conditions such as thermal runaway or collision), thereby guaranteeing the safety of the battery cell.

In addition, it should be noted that the explosion-proof valve 4 may be disposed on the same side wall, of the housing 1, as the foregoing first exhaust passage 121 and ventilation assembly 3. For example, referring to FIGs. 4 to 6, in some embodiments of this disclosure, the explosion-proof valve 4, the first exhaust passage 121, and the ventilation assembly 3 may all be disposed on the upper side wall of the housing 1. In addition, the explosion-proof valve 4 may alternatively be disposed on a side wall of the housing 11 different from the first exhaust passage 121 and the ventilation assembly 3. For example, the explosion-proof valve 4 may be disposed on the upper side wall of the housing 1, and the first exhaust passage 121 and the ventilation assembly 3 may be disposed on the left or right side wall of the housing 1.

In addition, in the embodiments of this disclosure, the explosion-proof valve 4, the first exhaust passage 121, and the ventilation assembly 3 are independent of each other. When gas is generated in the accommodating cavity 11 with the gradual consumption of the electrolyte, the gradually generated gas can be discharged through the first exhaust passage 121 and the ventilation assembly 3, which can make the pressure in the accommodating cavity 11 not greater than the opening pressure of the explosion-proof valve 4, so that the explosion-proof valve 4 is not destroyed. When the battery cell is abnormal, the pressure in the accommodating cavity 11 rises rapidly, and the first exhaust passage 121 and the ventilation assembly 3 cannot meet the gas discharge requirement in the accommodating cavity 11. When the pressure of the gas in the accommodating cavity 11 is greater than the preset threshold, the explosion-proof valve 4 is destroyed, and the gas in the accommodating cavity 11 can be quickly discharged through the explosion-proof valve 4.

It can be understood that when the explosion-proof valve 4 is destroyed, a discharge rate of the gas in the accommodating cavity 11 by the explosion-proof valve 4 is greater than the discharge rate of the gas in the accommodating cavity 11 by the first exhaust passage 121 and the ventilation assembly 3.

With the foregoing arrangement, in the battery cell provided in the embodiments of this disclosure, when the pressure in the accommodating cavity 11 increases rapidly, the explosion-proof valve 4 can be used to quickly discharge the gas in the accommodating cavity 11, thereby further improving the reliability of the battery cell.

It should be noted that according to the foregoing description, the ventilation film 32 may be disposed on the side of the connecting member 31 closer to the accommodating cavity 11, or the ventilation film 32 may be disposed on the side of the connecting member 31 farther away from the accommodating cavity 11.

On this basis, to use the connecting member 31 to protect the ventilation film 32, referring to FIGs. 7 to 9, in some embodiments of this disclosure, the ventilation assembly 3 is disposed on a side of the first exhaust passage 121 closer to the accommodating cavity 11, and the ventilation film 32 is disposed on the side of the connecting member 31 closer to the accommodating cavity 11.

It should be noted that in the embodiments of this disclosure, the ventilation assembly 3 may be appropriately fixed on the side of the first wall 12 closer to the accommodating cavity 11 corresponding to the first exhaust passage 121, so that the ventilation assembly 3 covers an opening on a side of the first exhaust passage 121 closer to the accommodating cavity 11. On this basis, the ventilation film 32 may be disposed on the side of the connecting member 31 closer to the accommodating cavity 11 by appropriately arranging the relative positions of the connecting member 31 and the ventilation film 32.

In this way, for the gas in the accommodating cavity 11, according to the discharge path of the gas in the accommodating cavity 11, the gas in the accommodating cavity 11 is sequentially discharged to the external environment through the ventilation film 32, the connecting member 31, and the first exhaust passage 121.

With the foregoing arrangement, the ventilation film 32 can be made as close as possible to the accommodating cavity 11, which can further reduce the loss of electrolyte in the battery cell and prolong the service life of the battery cell. In addition, with the foregoing arrangement, the first wall 12 and the connecting member 31 can also be used to protect the ventilation film 32, reducing the risk of damage to the ventilation film 32, thereby further improving the reliability of the battery cell and increasing the service life of the battery cell.

In addition, referring to FIG. 7, in some embodiments of this disclosure, the first wall 12 is provided with a communication groove 124 on the side closer to the accommodating cavity 11, the communication groove 124 communicates with the first exhaust passage 121 and the accommodating cavity 11, and the ventilation assembly 3 is mounted in the communication groove 124.

Specifically, referring to FIG. 7, a groove-like structure may be provided on the side of the first wall 12 closer to the accommodating cavity 11 to form the communication groove 124. Further, the communication groove 124 may be used to mount the ventilation assembly 3.

In addition, the communication groove 124 may be arranged corresponding to the first exhaust passage 121, so that the communication groove 124 communicates with the first exhaust passage 121.

For example, referring to FIG. 7, the relative positions in FIG. 7 are used as an example for description. The first exhaust passage 121 may be arranged on a bottom wall of the communication groove 124 on a side farther away from the accommodating cavity 11, so that the first exhaust passage 121 and the communication groove 124 can communicate with each other.

In addition, an opening of the communication groove 124 on a side facing the accommodating cavity 11 may be arranged opposite the accommodating cavity 11, so that the communication groove 124 can communicate with the accommodating cavity 11.

Moreover, for the case in which another structure is provided between the first wall 12 and the accommodating cavity 11, another channel may also be provided on the another structure to communicate the communication groove 124 with the accommodating cavity 11.

It should be noted that in the embodiments of this disclosure, on the basis of mounting the ventilation assembly 3 in the communication groove 124, the ventilation film 32 may be disposed on the side of the connecting member 31 closer to the accommodating cavity 11; and in addition, the ventilation film 32 may alternatively be disposed on the side of the connecting member 31 farther away from the accommodating cavity 11.

With the foregoing arrangement, in the battery cell provided in the embodiments of this disclosure, the provision of the communication groove 124 on the side of the first wall 12 closer to the accommodating cavity 11 can facilitate mounting of the ventilation assembly 3.

On this basis, in some embodiments of this disclosure, the communication groove 124 is a stepped groove 1241 provided on the side of the first wall 12 closer to the accommodating cavity 11, the ventilation assembly 3 is mounted in the stepped groove 1241, a flow gap is present between the ventilation assembly 3 and a surface of the first wall 12 opposite the ventilation assembly 3, and the through hole 311 communicates with the first exhaust passage 121 through the flow gap.

It should be noted that the communication groove 124 herein being a stepped groove 1241 may be considered as that the communication groove 124 is formed by at least two stepped groove-like structures. In this way, the stepped structure of the stepped groove 1241 can be used to limit the mounting of the ventilation assembly 3 to facilitate the positioning of the ventilation assembly 3.

Further, the surface of the first wall 12 opposite the ventilation assembly 3 herein may also be considered as a part of the surface of the ventilation assembly 3 on the side closer to the accommodating cavity 11 that is located in the communication groove 124. On this basis, adjusting the position of the ventilation assembly 3 in the communication groove 124 allows for a flow gap present between the ventilation assembly 3 and the surface of the first wall 12 opposite the ventilation assembly 3.

For example, referring to FIG. 7, adjusting the position where the ventilation assembly 3 is mounted in the communication groove 124 allows for a gap present between the ventilation assembly 3 and the bottom wall of the communication groove 124 farther away from the accommodating cavity 11, so that the gap can be used to form the foregoing flow gap. In this way, the flow gap can be used to connect the through hole 311 to the first exhaust passage 121.

With the foregoing arrangement, in the battery cell provided in the embodiments of this disclosure, configuring the communication groove 124 as the stepped groove 1241 on the side of the first wall 12 closer to the accommodating cavity 11 and mounting the ventilation assembly 3 in the stepped groove 1241 can facilitating mounting of the ventilation assembly 3 in the stepped groove 1241, and allow the stepped groove 1241 to be used to position the ventilation assembly 3. In addition, provision of the flow gap between the ventilation assembly 3 and the surface of the first wall 12 opposite the ventilation assembly 3 allows the flow gap to be used to guarantee the communication between the through hole 311 and the first exhaust passage 121.

On this basis, referring to FIG. 7, in some embodiments of this disclosure, all the through holes 311 are staggered with the first exhaust passage 121.

It should be noted that referring to FIG. 7, all the through holes 311 herein being staggered with the first exhaust passage 121 means that projections of all the through holes 311 in axial directions of the through holes 311 toward the first wall 12 do not overlap with the opening on the side of the first exhaust passage 121 closer to the accommodating cavity 11.

For example, referring to FIG. 7, in some embodiments of this disclosure, the through holes 311 may be arranged at the middle position of the connecting member 31, and the first exhaust passage 121 may be arranged at a position opposite an edge of the connecting member 31.

With the foregoing arrangement, in the battery cell provided in the embodiments of this disclosure, all the through holes 311 being staggered with the first exhaust passage 121 allows the connecting member 31 to be used to form a detour flow between the first exhaust passage 121 and the through holes 311, thereby reducing the risk of foreign matters outside the battery cell directly entering the accommodating cavity 11 through the first exhaust passage 121, and protecting the cell 2. In addition, the risk of foreign matters entering the first exhaust passage 121 to get in direct contact with the ventilation film 32 can also be reduced, thereby protecting the ventilation film 32. For example, when the first wall 12 is configured as the upper side wall of the battery cell, the risk of foreign matters outside the battery cell directly falling into the accommodating cavity 11 through the first exhaust passage 121 can be reduced.

In addition, referring to FIGs. 7 to 9, in the battery cell according to some embodiments of this disclosure, the stepped groove 1241 includes a mounting groove 12411 and a first stepped groove 12412, the first stepped groove 12412 is located on a side of the mounting groove 12411 farther away from the accommodating cavity 11, a radial size of the first stepped groove 12412 is smaller than a radial size of the mounting groove 12411, the connecting member 31 is mounted in the mounting groove 12411, the ventilation film 32 is located on a side of the connecting member 31 closer to the accommodating cavity 11, and the through hole 311 and the first exhaust passage 121 communicate with each other through a space in the first stepped groove 12412.

For example, referring to FIG. 7, in some embodiments of this disclosure, the stepped groove 1241 may be configured to include the mounting groove 12411 and the first stepped groove 12412. Moreover, the positions and sizes of the mounting groove 12411 and the second stepped groove 12413 may be appropriately arranged so that the first stepped groove 12412 is located on the side of the mounting groove 12411 farther away from the accommodating cavity 11, and the radial size of the first stepped groove 12412 is smaller than the radial size of the mounting groove 12411.

It should be noted that the radial size of the first stepped groove 12412 herein refers to a size of the first stepped groove 12412 in a direction perpendicular to an axial direction of the first stepped groove 12412; and the radial size of the mounting groove 12411 refers to a size of the mounting groove 12411 in a direction perpendicular to an axial direction of the mounting groove 12411.

For example, referring to FIG. 7, the relative positions in FIG. 7 are used as an example for description. The radial size of the first stepped groove 12412 refers to a size of the first stepped groove 12412 in a horizontal direction, and the radial size of the mounting groove 12411 refers to a size of the mounting groove 12411 in a horizontal direction.

It can be understood that in the embodiments of this disclosure, an axis of the first stepped groove 12412 and an axis of the mounting groove 12411 may be arranged to coincide with each other.

In this way, the connecting member 31 can be mounted in the mounting groove 12411, and the space in the first stepped groove 12412 can be used to form a flow gap between the first exhaust passage 121 and the connecting member 31, so that the through hole 311 and the first exhaust passage 121 communicate with each other.

It should be noted that in the embodiments of this disclosure, the through hole 311 may be configured opposite the first exhaust passage 121, so that the foregoing flow gap can be used to connect the through hole 311 and the first exhaust passage 121. In addition, the through hole 311 and the first exhaust passage 121 may alternatively be staggered with each other, so that the foregoing flow gap can also be used to connect the through hole 311 and the first exhaust passage 121.

With the foregoing arrangement, in the battery cell provided in the embodiments of this disclosure, the space in the first stepped groove 12412 can be used to form a flow gap between the through hole 311 and the first exhaust passage 121, thereby facilitating the provision of the flow gap. In addition, the space in the first stepped groove 12412 can be used to perform different arrangements for the through hole 311 and the first exhaust passage 121. For example, the through hole 311 and the first exhaust passage 121 may be arranged opposite each other or staggered with each other, thereby improving the flexibility of arrangement of the first exhaust passage 121 or the through hole 311.

In addition, referring to FIGs. 7 to 9, in some embodiments of this disclosure, the stepped groove 1241 includes a mounting groove 12411 and a second stepped groove 12413, the second stepped groove 12413 is located on a side of the mounting groove 12411 closer to the accommodating cavity 11, a radial size of the second stepped groove 12413 is larger than a radial size of the mounting groove 12411, the connecting member 31 is mounted in the mounting groove 12411, and the ventilation film 32 is located in a space formed by the second stepped groove 12413.

For example, referring to FIG. 7, in some embodiments of this disclosure, the stepped groove 1241 may be configured to include the mounting groove 12411 and the second stepped groove 12413. Moreover, the positions and sizes of the mounting groove 12411 and the first stepped groove 12412 may be appropriately arranged so that the second stepped groove 12413 is located on the side of the mounting groove 12411 closer to the accommodating cavity 11, and the radial size of the second stepped groove 12413 is larger than the radial size of the mounting groove 12411.

It should be noted that the radial size of the second stepped groove 12413 herein refers to a size of the second stepped groove 12413 in a direction perpendicular to an axial direction of the second stepped groove 12413; and the radial size of the mounting groove 12411 refers to a size of the first stepped groove 12412 in a direction perpendicular to an axial direction of the mounting groove 12411.

For example, referring to FIG. 7, the relative positions in FIG. 7 are used as an example for description. The radial size of the second stepped groove 12413 refers to a size of the second stepped groove 12413 in a horizontal direction, and the radial size of the mounting groove 12411 refers to a size of the mounting groove 12411 in a horizontal direction.

It can be understood that in the embodiments of this disclosure, an axis of the second stepped groove 12413 and an axis of the mounting groove 12411 may be arranged to coincide with each other.

In this way, the connecting member 31 can be mounted in the mounting groove 12411, and the space in the second stepped groove 12413 can be used to accommodate the ventilation film 32. In addition, through appropriate arrangement, a surface of the ventilation film 32 on a side closer to the accommodating cavity 11 does not exceed the second stepped groove 12413.

With the foregoing arrangement, in the battery cell provided in the embodiments of this disclosure, the stepped groove 1241 being arranged to include the mounting groove 12411 and the second stepped groove 12413 allows the space formed by the second stepped groove 12413 to be used to accommodate the ventilation film 32, which can facilitate the mounting of the ventilation film 32.

In addition, referring to FIGs. 7 to 9, in some embodiments of this disclosure, the connecting member 31 and the mounting groove 12411 are connected by welding, and a weld joint 312 between the connecting member 31 and the mounting groove 12411 is accommodated in the space formed by the second stepped groove 12413.

For example, in some embodiments of this disclosure, the first wall 12 may be made of a metal material, and the connecting member 31 may also be made of a metal structure, so that the connecting member 31 and the first wall 12 can be connected by welding. In addition, the first wall 12 may be made of a plastic material, and the connecting member 31 may also be made of a plastic material, so that the connecting member 31 and the first wall 12 can be connected by ultrasonic welding.

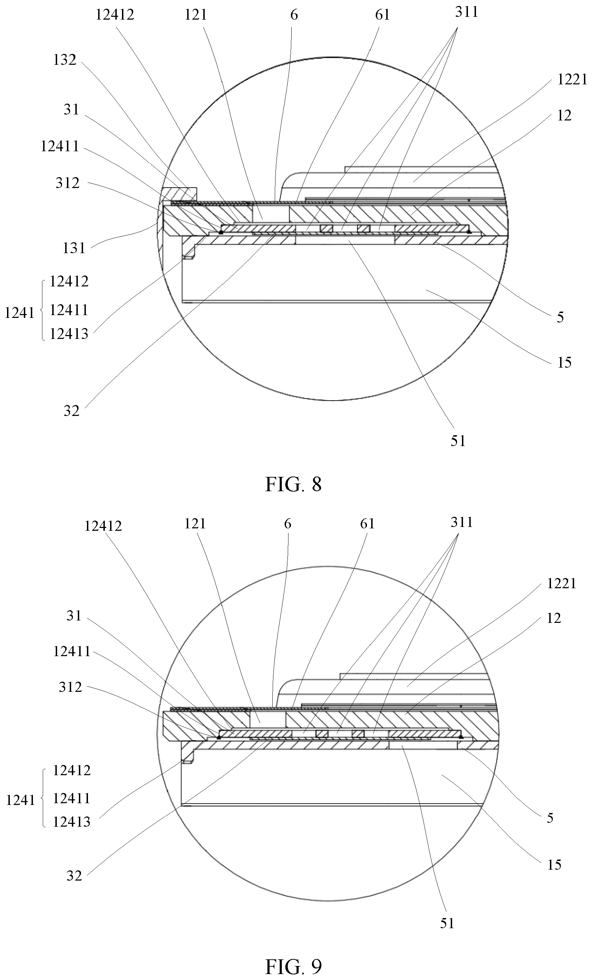

For example, referring to FIG. 9, for providing the mounting groove 12411 and the second stepped groove 12413 on the first wall 12, a lower surface of the mounting groove 12411 and a lower surface of the connecting member 31 may be set to be flush with each other, and an edge of the lower surface of the connecting member 31 and a position where the mounting groove 12411 is connected may be welded for connection. In this way, a depth of the second stepped groove 12413 can be appropriately set so that the second stepped groove 12413 can accommodate the weld joint 312 between the connecting member 31 and the first wall 12.

With the foregoing arrangement, the space formed by the second stepped groove 12413 can be used to accommodate the weld joint 312 between the connecting member 31 and the mounting groove 12411, thereby protecting the weld joint 312 between the connecting member 31 and the mounting groove 12411, reducing the risk of squeezing the weld joint 312 when mounting the ventilation assembly 3, thus guaranteeing the effectiveness of the connection between the connecting member 31 and the mounting groove 12411, and further improving the reliability of the battery cell provided in the embodiments of this disclosure.

In addition, referring to FIGs. 7 to 9, in some embodiments of this disclosure, a plurality of through holes 311 are provided, and the plurality of through holes 311 are evenly spaced apart on the connecting member 31.

It should be noted that in the embodiments of this disclosure, a shape of a cross-section of the through hole 311 is not limited. For example, the shape of the cross-section of the through hole 311 may be configured as a circle, or the shape of the cross-section of the through hole 311 may be configured as a rectangular or a water drop shape, or various shapes.

In addition, in the embodiments of this disclosure, the plurality of through holes 311 being evenly spaced apart on the connecting member 31 may mean that the plurality of through holes 311 are arranged in rows and columns in an array distribution, or the plurality of through holes 311 may be arranged in a circumferential array distribution.

For arranging the plurality of through holes 311 in a circumferential array distribution, a through hole 311 may be further provided on the connecting member 31 corresponding to the center of the circumferential array distribution of the plurality of through holes 311.

With the foregoing arrangement, in the battery cell provided in the embodiments of this disclosure, on the premise of ensuring a constant flow area of the flow channel formed by the through holes 311, dispersing the through holes 311 into multiple ones can guarantee the strength of the connecting member 31. In addition, dispersing the through holes 311 into multiple ones can also ensure that the connecting member 31 provides good support for the ventilation film 32.

In addition, referring to FIG. 8, in some embodiments of this disclosure, the battery cell further includes a protection sheet 6, the protection sheet 6 is mounted on a side of the first wall 12 farther away from the accommodating cavity 11 and shields the first exhaust passage 121; and a communication channel 61 is formed on a side of the protection sheet 6 facing the first wall 12, one end of the communication channel 61 communicates with the first exhaust passage 121, and the other end of the communication channel 61 is staggered with the first exhaust passage 121 and communicates with an external environment.

It should be noted that in some embodiments of this disclosure, to protect the first exhaust passage 121, a protection sheet 6 may be provided for the first exhaust passage 121 to reduce the risk of foreign matters outside the battery cell falling into the first exhaust passage 121 and affecting the performance of the ventilation assembly.

In view of this, in the embodiments of this disclosure, the protection sheet 6 may be attached to the side of the first wall 12 farther away from the accommodating cavity 11 corresponding to the first exhaust passage 121 to form a shield for the first exhaust passage 121. Moreover, a groove may be provided on a side of the protection sheet 6 facing the first wall 12, or a gap may be provided between the protection sheet 6 and the first wall 12 to form the foregoing communication channel 61.

For example, referring to FIG. 8, taking the relative positions in FIG. 8 as an example, the first exhaust passage 121 extends in a vertical direction, and the communication channel 61 extends in a horizontal direction. The first exhaust passage 121 communicates with one end of the communication channel 61, and the other end of the communication channel 61 communicates with the external environment, thereby allowing the first exhaust passage 121 to communicate with the external environment.

In addition, it should be noted that the protection sheet 6 may be regarded as a protection structure mounted at an opening of the first exhaust passage 121 located on the first wall 12. A sheet-like structure can be used to arrange the protection sheet 6. For example, a tin foil sheet can be used as the protection sheet 6, or the protection sheet 6 can be configured as made of polypropylene, polyethylene, or polycarbonate, or another material. This is not limited in the embodiments of this disclosure.

In addition, in the embodiments of this disclosure, a size of the protection sheet 6 is not limited either. For example, the protection sheet 6 may be arranged only corresponding to the first exhaust passage 121 so that the size of the protection sheet 6 is slightly larger than the size of the opening of the first exhaust passage 121 on the side of the first wall 12 farther away from the accommodating cavity 11; or the protection sheet 6 may be arranged corresponding to the entire first wall 12 so that the protection sheet 6 covers the entire surface of the first wall 12 on the side farther away from the accommodating cavity 11.

It should be noted that in the disclosed embodiments, the communication channel 61 may be used to extend to an edge of the protection sheet 6, thereby connecting the first exhaust passage 121 to the edge of the protection sheet 6 and ultimately connecting the first exhaust passage 121 to the external environment. In addition, the protection sheet 6 may be provided with a hole at a middle position, and the first exhaust passage 121 may be connected to the hole at the middle position of the protection sheet 6, so that the first exhaust passage 121 is ultimately connected to the external environment.

With the foregoing arrangement, in the battery cell provided in the embodiments of this disclosure, the protection sheet 6 can be used to protect the first exhaust passage 121, which can reduce the risk of foreign matters outside the battery cell entering the first exhaust passage 121. In addition, provision of the communication channel 61 between the first wall 12 and the protection sheet 6 can guarantee the communication between the first exhaust passage 121 and the external environment.

On this basis, referring to FIGs. 3 and 4, a contour of the protection sheet 6 matches a contour of the first wall 12 in shape.

It should be noted that the contour of the protection sheet 6 matching the contour of the first wall 12 in shape herein can be considered as that the size of the protection sheet 6 is the same as or approximately the same as the size of the first wall 12, and the protection sheet 6 can cover the surface of the first wall 12 on the side farther away from the accommodating cavity 11.

It can be understood that in the embodiments of this disclosure, the protection sheet 6 may be arranged to extend along the surface of the first wall 12 on the side farther away from the accommodating cavity 11, and the contour of the protection sheet 6 matches the contour of the first wall 12 in shape. This enables the protection sheet 6 to form a top patch of the battery cell, or a top patch is used to form the protection sheet 6 of the battery cell. In this way, for using the top patch of the battery cell to form the protection sheet 6, there is no need to separately provide the protection sheet 6.

In this way, in the embodiments of this disclosure, the protection sheet 6 can be used to provide insulation to prevent short-circuiting between the first wall 12 and external circuits. In addition, the protection sheet 6 can also protect the first wall 12 to prevent the first wall 12 from being scratched.

It can be understood that the protection sheet 6 may be provided with a sampling hole 62, a terminal avoidance hole 63, an electrolyte injection avoidance hole 64, an explosion-proof valve avoidance hole 65, and the like.

With the foregoing arrangement, in some embodiments of this disclosure, the top patch of the battery cell can be used to form the protection sheet 6 without the need to separately provide the protection sheet 6, thereby saving materials and reducing costs for the battery cell provided in the embodiments of this disclosure.

On this basis, referring to FIGs. 3, 4, and 10 to 13, the protection sheet 6 is provided with an adhesive layer on a surface on a side closer to the first wall 12, the adhesive layer includes an avoidance region 67, and the avoidance region 67 forms the foregoing communication channel 61.

It should be noted that in the embodiments of this disclosure, the protection sheet 6 may be connected to a top cover by providing a connecting adhesive on a surface of the protection sheet 6 on a side closer to the top cover. In this way, the connecting adhesive forms the adhesive layer on the side of the protection sheet 6 closer to the first wall 12.

Further, a part of the region corresponding to the first exhaust passage 121 on the protection sheet 6 may be reserved with no connecting adhesive provided. In this way, the part of the region on the protection sheet 6 with no connecting adhesive provided forms the avoidance region 67. Since the connecting adhesive provided on the protection sheet 6 has a specified thickness, the avoidance region 67 is equivalent to a groove being formed. The connecting adhesive being appropriately not provided at a position corresponding to the first exhaust passage 121 on the protection sheet 6 to a position communicating with the external environment allows the foregoing communication channel 61 to be formed using the foregoing groove at the position where the first exhaust passage 121 communicates with the external environment (such as an edge of the protection sheet 6 or a position of the sampling hole 62 provided on the protection sheet 6).

In addition, the connecting adhesive may be provided on the entire protection sheet 6 to form an adhesive layer, and then the adhesive layer at the position corresponding to the avoidance region may be removed to form the avoidance region 67.

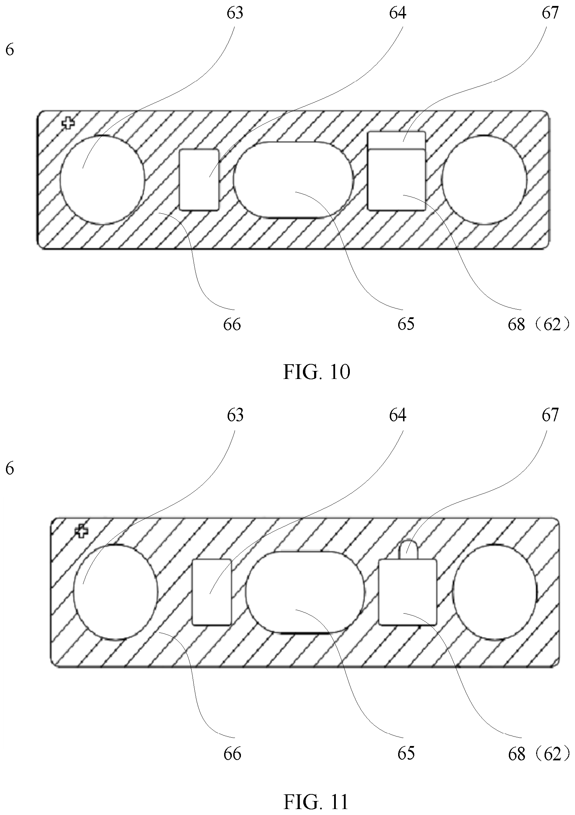

For example, for the foregoing connection of the first exhaust passage 121 to the hole provided on the protection sheet 6 through the communication channel 61, a region with no connecting adhesive may be reserved between the position corresponding to the first exhaust passage 121 on the protection sheet 6 and the position of the hole (such as the sampling hole 62) to form the avoidance region 67, so that the foregoing communication channel 61 can be formed by using the avoidance region 67. It should be noted that referring to FIGs. 10 to 13, connecting adhesive may be provided in other regions outside the avoidance region 67 to form a connection region 66 to implement the connection of the protection sheet 6 to the first wall 12.

It should be noted that referring to FIGs. 10 to 13, in the embodiments of this disclosure, a shape of the avoidance region 67 is not limited, provided that the avoidance region 67 can be used to form the communication channel 61 to connect the first exhaust passage 121 with the foregoing hole.

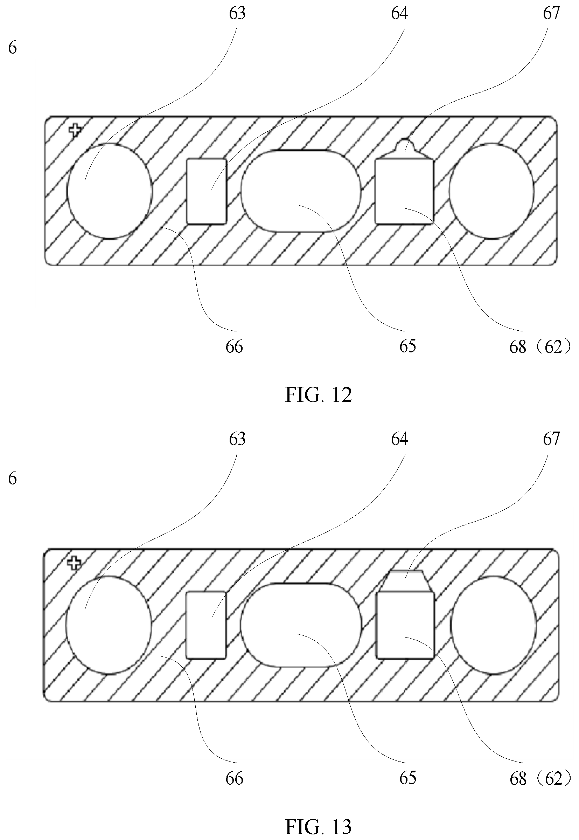

For example, referring to FIG. 10, in some embodiments of this disclosure, the sampling hole 62 may be configured as a rectangle, and the avoidance region 67 may also be configured as a rectangle, and a long side of the rectangle corresponding to the avoidance region 67 may be set to coincide with a side of the sampling hole 62. In addition, referring to FIG. 11, in some embodiments of this disclosure, the avoidance region 67 may alternatively be configured to include a semicircular region corresponding to the first exhaust passage 121 and a rectangular region communicating with the sampling hole 62, so that the rectangular region is connected to the sampling hole 62 along the shortest distance direction from the sampling hole 62. Moreover, referring to FIG. 12, in some embodiments of this disclosure, the avoidance region 67 may alternatively be configured to include a semicircular region corresponding to the first exhaust passage 121 and a triangular region communicating with the sampling hole 62, so that the bottom edge of the triangular region is arranged to coincide with a side of the sampling hole 62. Referring to FIG. 13, in some embodiments of this disclosure, the avoidance region 67 may alternatively be configured as a trapezoid, and a long side corresponding to the avoidance region 67 may be arranged to coincide with a side of the sampling hole 62.

Certainly, in addition to the foregoing arrangement methods, the avoidance region 67 may alternatively be arranged as other shapes. This is not limited in the embodiments of this disclosure.

With the foregoing arrangement, the foregoing communication channel 61 can be formed by using the avoidance region on the protection sheet 6, which allows for simple structure of the communication channel 61 with no need for separate provision.

In addition, in some embodiments of this disclosure, the protection sheet 6 is provided with a discharge hole 68, the discharge hole 68 is staggered with the first exhaust passage 121, and the first exhaust passage 121 communicates with the discharge hole 68 through the communication channel 61.

It should be noted that in the embodiments of this disclosure, a specific structural type of the discharge hole 68 is not limited. The discharge hole 68 is a hole structure provided in the protection sheet 6. Any one of the sampling hole 62, the terminal avoidance hole 63, the electrolyte injection avoidance hole 64, or the explosion-proof valve avoidance hole 65 in the protection sheet 6 may be used as the discharge hole 68, or an additional hole may be separately provided as the discharge hole 68.

In addition, in the embodiments of this disclosure, the discharge hole 68 being staggered with the first exhaust passage 121 means that the discharge hole 68 is not opposite the first exhaust passage 121. For example, it can be considered that a projection of the first exhaust passage 121 toward the discharge hole 68 in an axial direction of the first exhaust passage 121 does not overlap with the discharge hole 68.

On this basis, the first exhaust passage 121 may be connected to the discharge hole 68 through the foregoing communication channel 61, so that the discharge hole 68 can be used as the discharge channel of the first exhaust passage 121 to connect the accommodating cavity 11 to the external environment.

With the foregoing arrangement, in the battery cell provided in the embodiments of this disclosure, provision of the discharge hole 68 in the protection sheet 6 allows the first exhaust passage 121 to be connected to the external environment using the discharge hole 68. When an edge of the first wall 12 has a shield, it can be ensured that the first exhaust passage 121 is connected to the external environment.

On this basis, in some embodiments of this disclosure, the discharge hole 68 is a sampling hole 62.

It should be noted that in the embodiments of this disclosure, the sampling hole 62 may be used to configure a temperature sampling structure of the battery cell. In addition, the sampling hole 62 may also be used as a quick code scanning hole of the battery cell. A function of the sampling hole 62 is not limited in the embodiments of this disclosure.

With the foregoing arrangement, in the battery cell provided in the embodiments of this disclosure, the sampling hole 62 may be used as the discharge channel of the first exhaust passage 121, so that there is no need to separately provide a discharge channel for the first exhaust passage 121, thereby making the structure of the protection sheet 6 in the embodiments of this disclosure simple and convenient to manufacture.

On this basis, referring to FIGs. 3 and 8, in some embodiments of this disclosure, the housing 1 further includes a peripheral wall 15, and a circumferential edge of the first wall 12 is connected to the peripheral wall 15. The battery cell further includes a housing insulation film 13 located on an outer surface of the housing 1. The housing insulation film 13 includes a main body portion 131 and a connecting flange 132. The main body portion 131 covers a surface of the peripheral wall 15 on a side farther away from the accommodating cavity 11. The connecting flange 132 is connected to the main body portion 131 and covers an edge of the protection sheet 6 on a side farther away from the accommodating cavity 11.

For example, for the peripheral wall 15, the peripheral wall 15 can be considered as a side wall of the battery cell connected to the circumferential edge of the first wall 12. Referring to FIGs. 3 and 8, taking the relative positions in FIGs. 3 and 8 as an example, the first wall 12 can be considered as the upper wall of the housing 1 of the battery cell, and the peripheral wall 15 includes the front, rear, left, and right side walls of the housing 1.

It should be noted that in the embodiments of this disclosure, the housing insulation film 13 is located on the outer surface of the housing 1. The housing insulation film 13 can provide isolation, effectively isolating the battery cell from the external environment, and can also protect the battery cell. Polypropylene, polyimide, polyamide, and other materials can be used to make the housing insulation film 13.

To guarantee the connection between the housing insulation film 13 and the housing 1, referring to FIGs. 4 and 8, the housing insulation film 13 includes a main body portion 131 and a connecting flange 132. The main body portion 131 covers the surface of the peripheral wall 15 on the side farther away from the accommodating cavity 11. The surface of the peripheral wall 15 on the side farther away from the accommodating cavity 11 can also be considered as the outer surface of the peripheral wall 15. The connecting flange 132 is equivalent to a flanging structure of the main body portion 131, and the connecting flange 132 covers the edge of the protection sheet 6 on the side farther away from the accommodating cavity 11.

With the foregoing arrangement, the connecting flange 132 can be used to provide connection as well as insulation and protection between the first wall 12 and the peripheral wall 15. In addition, in the foregoing embodiments, connecting the communication channel 61 to the discharge hole 68 instead of an edge of the protection sheet 6 can ensure that the first exhaust passage 121 is connected to the external environment.

On this basis, referring to FIGs. 3 and 4, the discharge hole 68 is disposed at a middle position of the protection sheet 6 in a thickness direction of the battery cell, and the first exhaust passage 121 is located on a side of the discharge hole 68 in the thickness direction of the battery cell.

In some embodiments of this disclosure, the discharge hole 68 is disposed at the middle position of the protection sheet 6 in the thickness direction of the battery cell, which can facilitate provision of the discharge hole 68 and prevent the discharge hole 68 from being covered by the connecting flange 132, ensuring the normal use of the discharge hole 68. On this basis, in the embodiments of this disclosure, the first exhaust passage 121 is located on a side of the discharge hole 68 in the thickness direction of the battery cell.

It should be noted that in the embodiments of this disclosure, the first exhaust passage 121 may be arranged on the upper side or the lower side of the discharge hole 68 relative to the discharge hole 68 in the thickness direction of the battery cell. This is not limited in the embodiments of this disclosure.

With the foregoing arrangement, in the battery cell provided in the embodiments of this disclosure, under a condition that the original design of the discharge hole 68 remains unchanged, the first exhaust passage 121 can be appropriately located on a side of the discharge hole 68 in the thickness direction of the battery cell. This can facilitate provision of the first exhaust passage 121 and ensure that the shape of the protection sheet 6 remains unchanged, so that there is no need to separately provide a protection sheet 6 for the first exhaust passage 121, thereby saving the manufacturing costs of the battery cell in the embodiments of this disclosure.

In addition, referring to FIGs. 5 to 9, in some embodiments of this disclosure, the battery cell further includes an insulation pad 5. The insulation pad 5 is disposed between the first wall 12 and the cell 2. The insulation pad 5 is provided with a second exhaust passage 51. The ventilation assembly 3 is disposed between the first wall 12 and the insulation pad 5. The second exhaust passage 51 communicates with the ventilation assembly 3. The ventilation film 32 and the insulation pad 5 are spaced apart from each other.

It should be noted that in the embodiments of this disclosure, the insulation pad 5 can provide insulation between the first wall 12 and the cell 2. In addition, the insulation pad 5 can also be used to provide a sealing effect for the accommodating cavity 11 to seal the cell 2 in the accommodating cavity 11. For example, the insulation pad 5 may be made of a plastic material, or the insulation pad 5 may be made of other insulating materials. On this basis, when the first wall 12 is arranged as the upper side wall of the battery cell, the first wall 12 may also be referred to as a top cover, and the insulation pad 5 may be referred to as a plastic pad.

For example, referring to FIG. 6, the first wall 12 and the insulation pad 5 may be further provided with a terminal mounting hole 122, an electrolyte injection hole 123, and other structures. Referring to FIG. 4, in the battery cell, a sealing peg 1231 is further mounted on the electrolyte injection hole 123, and a terminal 1221 and a terminal sealing ring 1222 are further mounted on the terminal mounting hole 122.

Further, the insulation pad 5 is further provided with another exhaust passage. For ease of description, the exhaust passage may be referred to as a second exhaust passage 51. For example, referring to FIGs. 6 to 9, in the embodiments of this disclosure, a straight hole penetrating both sides of the insulation pad 5 may be provided in the insulation pad 5 to form the second exhaust passage 51. It can be understood that in the embodiments of this disclosure, a cross-section of the second exhaust passage 51 may be configured as a circle. In addition, the cross-section of the second exhaust passage 51 may alternatively be configured as other shapes. For example, the cross-section of the second exhaust passage 51 may be configured as rectangular or the like.

Referring to FIGs. 7 to 9, in the embodiments of this disclosure, appropriately arranging the relative positions of the first exhaust passage 121, the second exhaust passage 51, and the ventilation assembly 3 allows the ventilation assembly 3 to be used to connect the first exhaust passage 121 and the second exhaust passage 51.

In addition, referring to FIGs. 7 to 9, in some embodiments of this disclosure, the ventilation assembly 3 may be sandwiched between the first wall 12 and the insulation pad 5. Specifically, a communication groove 124 may be provided in the first wall 12 or the insulation pad 5 to accommodate the ventilation assembly 3. Moreover, both ends of the communication groove 124 may be made to communicate with the first exhaust passage 121 or the second exhaust passage 51 respectively to connect the first exhaust passage 121 and the second exhaust passage 51 through the ventilation assembly 3.

Further, referring to FIGs. 7 to 9, in the embodiments of this disclosure, the ventilation film 32 and the insulation pad 5 are spaced apart from each other. It should be noted that the ventilation film 32 and the insulation pad 5 being spaced apart herein means that there is a gap between the ventilation member film and the insulation pad 5, which can prevent contact between the ventilation film 32 and the insulation pad 5, thereby protecting the ventilation film 32 and reducing the risk of damage to the ventilation film 32 caused by the insulation pad 5.

It should be noted that the insulation pad 5 may be appropriately arranged to form the foregoing avoidance gap, or the first wall 12 may be appropriately arranged to form the foregoing avoidance gap. For example, referring to FIG. 7, the first wall 12 may be provided with a stepped groove 1241, and the stepped groove 1241 may include the foregoing mounting groove 12411 and second stepped groove 12413. The connecting member 31 is mounted in the mounting groove 12411, and the ventilation film 32 is located in the space formed by the second stepped groove 12413.

In this way, the lower surface of the connecting member 31 and the lower surface of the mounting groove 12411 may be arranged to be flush with each other, and the depth of the second stepped groove 12413 may be arranged to be greater than the thickness of the ventilation film 32, so that a gap can be formed between the ventilation film 32 and the insulation pad 5, thereby allowing the ventilation film 32 and the insulation pad 5 to be spaced apart from each other.

With the foregoing arrangement, the mounting of the ventilation film 32 can be facilitated, and the ventilation film 32 and the insulation being spaced apart from each other allows the ventilation film 32 to be prevented from getting in contact with the insulation pad 5, which can protect the ventilation film 32 and reduce the risk of damage to the ventilation film 32 caused by the insulation pad 5.

On this basis, in some embodiments of this disclosure, the first exhaust passage 121 and the second exhaust passage 51 are staggered with each other.

The first exhaust passage 121 and the second exhaust passage 51 being staggered with each other herein means that the first exhaust passage 121 and the second exhaust passage 51 are not opposite each other in a direction from the insulation pad 5 to the first wall 12. For example, referring to FIG. 7, taking the relative positions in FIG. 7 as an example for description, the first exhaust passage 121 may be arranged at a position on the left side of the first wall 12, the second exhaust passage 51 may be arranged at a position on the right side of the insulation pad 5, and in the direction from the insulation pad 5 to the first wall 12, a projection of the second exhaust passage 51 toward the first exhaust passage 121 does not overlap with the first exhaust passage 121.

Referring to FIG. 7, a communication groove 124 may be provided on a side of the first wall 12 closer to the insulation pad 5, and appropriately arranging a shape of the communication groove 124 allows both ends of the communication groove 124 to communicate with the first exhaust passage 121 and the second exhaust passage 51 respectively.

In this way, the first exhaust passage 121 and the second exhaust passage 51 being staggered with each other can be reduce the risk of foreign matters outside the battery cell entering the accommodating cavity 11 through the first exhaust passage 121 and the second exhaust passage 51, providing protect for the cell 2. For example, when the first wall 12 is arranged as the upper side wall of the battery cell, the risk of foreign matters outside the battery cell falling into the accommodating cavity 11 through the first exhaust passage 121 and the second exhaust passage 51 can be reduced.

Further, referring to FIG. 8, in some embodiments of this disclosure, the through hole 311 is disposed opposite the second exhaust passage 51 to communicate with the second exhaust passage 51.

The through hole 311 being disposed opposite the second exhaust passage 51 herein means that the through hole 311 is directly opposite the second exhaust passage 51, so that the flow channel between the through hole 311 and the second exhaust passage 51 can extend in a straight line. For example, referring to FIG. 7, projections of the through hole 311 and the second exhaust passage 51 in a direction from the first wall 12 to the insulation pad 5 may be arranged to coincide or intersect with each other, which allows for direct connection between the through hole 311 and the second exhaust passage 51.

With the foregoing arrangement, the through hole 311 and the second exhaust passage 51 being disposed opposite each other can guarantee the flow capacity between the through hole 311 and the second exhaust passage 51 to facilitate the discharge of the gas in the accommodating cavity 11.

In addition, referring to FIG. 9, in some embodiments of this disclosure, the through hole 311 is staggered with the second exhaust passage 51, and the through hole 311 communicates with the second exhaust passage 51.

It should be noted that the through hole 311 being staggered with the second exhaust passage 51 herein means that projections of all the through holes 311 in axial directions of the through holes 311 toward the second exhaust passage 51 do not overlap with the opening of the second exhaust passage 51 on the side farther away from the accommodating cavity 11.

On this basis, a flow gap may be provided between the first wall 12 and the insulation pad 5 to implement the communication between the through hole 311 and the second exhaust passage 51.

For example, referring to FIG. 9, the space in the second stepped groove 12413 may be used to form a flow gap to implement communication between the through hole 311 and the second exhaust passage 51.

With the foregoing arrangement, the risk of foreign matters outside the battery cell entering the accommodating cavity 11 through the first exhaust passage 121, the through hole 311, and the second exhaust passage 51 can be further reduced, the risk of damage to the cell 2 can be reduced, and the reliability of the battery cell can be further improved.

Further, an embodiment of this disclosure further provides a battery, where the battery includes the battery cell provided in the foregoing embodiments. It should be noted that in the embodiments of this disclosure, the battery generally refers to a battery pack or a battery module.

Further, an embodiment of this disclosure further provides an electric apparatus or an energy storage apparatus, where the electric apparatus or the energy storage apparatus includes the battery cell or the battery provided in the foregoing embodiments.

The battery, the electric apparatus, or the energy storage apparatus provided in the embodiments of this disclosure includes the battery cell provided in the foregoing embodiments, and therefore has the same technical effects, which can improve the reliability of the battery cell, and prolong the service life of the battery cell.

The foregoing embodiments are for description of the technical solutions of this disclosure only rather than for limiting this disclosure. Although this disclosure has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this disclosure. All such modifications and equivalent replacements shall fall within the scope of claims and specification of this disclosure. In particular, as long as there is no structural conflict, the various technical features mentioned in the implementations can be combined in any manners. This disclosure is not limited to the specific embodiments disclosed in this specification, but includes all technical solutions falling within the scope of the claims.

### INDUSTRIAL PRACTICALITY

In the battery cell provided in embodiments of this disclosure, the first exhaust passage is provided on the first wall of the housing, and the ventilation assembly is mounted on the first wall and covers the first exhaust passage, so that gas in the accommodating cavity is in communication with an external environment through the first exhaust passage, the connecting member, and the ventilation film, thereby allowing the first exhaust passage, the connecting member, and the ventilation film to form a gas flow channel, maintaining a balance between a pressure in the accommodating cavity and a pressure of the external environment, and reducing the risk of deformation (such as bulging deformation or concave deformation) of the housing. In this way, gas generated by the consumption of an electrolyte can also be discharged out of the battery cell in time; and in addition, for the housing provided with an explosion-proof valve, the risk of the explosion-proof valve opening in advance can also be reduced. Therefore, through the foregoing arrangement, the battery cell provided in the embodiments of this disclosure can improve the reliability of the battery cell and prolong the service life of the battery cell.

## Claims

1. A battery cell, comprising:
a housing having an accommodating cavity, wherein the housing comprises a first wall, and the first wall is provided with a first exhaust passage;
a cell disposed in the accommodating cavity; and
a ventilation assembly mounted on the first wall and covering the first exhaust passage, wherein the ventilation assembly comprises a connecting member and a ventilation film, the connecting member is provided with at least one through hole, and the ventilation film covers the through hole(s).

2. The battery cell according to claim 1, wherein the ventilation assembly is disposed on a side of the first exhaust passage closer to the accommodating cavity, and the ventilation film is disposed on a side of the connecting member closer to the accommodating cavity.

3. The battery cell according to claim 1 or 2, wherein the first wall is provided with a communication groove on a side closer to the accommodating cavity, the communication groove communicates with the first exhaust passage and the accommodating cavity, and the ventilation assembly is mounted in the communication groove.

4. The battery cell according to claim 3, wherein the communication groove is a stepped groove provided on the side of the first wall closer to the accommodating cavity, the ventilation assembly is mounted in the stepped groove, a flow gap is present between the ventilation assembly and a surface of the first wall opposite the ventilation assembly, and the through hole communicates with the first exhaust passage through the flow gap.

5. The battery cell according to claim 4, wherein all the through holes are staggered with the first exhaust passage.

6. The battery cell according to claim 4 or 5, wherein the stepped groove comprises a mounting groove and a first stepped groove, the first stepped groove is located on a side of the mounting groove farther away from the accommodating cavity, a radial size of the first stepped groove is smaller than a radial size of the mounting groove, the connecting member is mounted in the mounting groove, the ventilation film is located on a side of the connecting member closer to the accommodating cavity, and the through hole and the first exhaust passage communicate with each other through a space in the first stepped groove.

7. The battery cell according to any one of claims 4 to 6, wherein the stepped groove comprises a mounting groove and a second stepped groove, the second stepped groove is located on a side of the mounting groove closer to the accommodating cavity, a radial size of the second stepped groove is larger than a radial size of the mounting groove, the connecting member is mounted in the mounting groove, and the ventilation film is located in a space formed by the second stepped groove.

8. The battery cell according to claim 7, wherein the connecting member and the mounting groove are connected by welding, and a weld joint between the connecting member and the mounting groove is accommodated in the second stepped groove.

9. The battery cell according to any one of claims 1 to 8, wherein a plurality of through holes are provided, and the plurality of through holes are evenly spaced apart on the connecting member.

10. The battery cell according to any one of claims 1 to 9, wherein the battery cell further comprises a protection sheet, the protection sheet is mounted on a side of the first wall farther away from the accommodating cavity and shields the first exhaust passage; and a communication channel is formed on a side of the protection sheet facing the first wall, one end of the communication channel communicates with the first exhaust passage, and the other end of the communication channel is staggered with the first exhaust passage and communicates with an external environment.

11. The battery cell according to claim 10, wherein a contour of the protection sheet matches a contour of the first wall in shape.

12. The battery cell according to claim 10 or 11, wherein the protection sheet is provided with an adhesive layer on a surface on a side closer to the first wall, the adhesive layer comprises an avoidance region, and the avoidance region forms the communication channel.

13. The battery cell according to any one of claims 10 to 12, wherein the protection sheet is provided with a discharge hole, the discharge hole is staggered with the first exhaust passage, and the first exhaust passage communicates with the discharge hole through the communication channel.

14. The battery cell according to claim 13, wherein the discharge hole is a sampling hole.

15. The battery cell according to claim 13 or 14, wherein the housing further comprises a peripheral wall, and a circumferential edge of the first wall is connected to the peripheral wall; and
the battery cell further comprises a housing insulation film located on an outer surface of the housing, the housing insulation film comprises a main body portion and a connecting flange, the main body portion covers a surface of the peripheral wall on a side farther away from the accommodating cavity, and the connecting flange is connected to the main body portion and covers an edge on a side of the protection sheet farther away from the accommodating cavity.

16. The battery cell according to any one of claims 13 to 15, wherein the discharge hole is disposed at a middle position of the protection sheet in a thickness direction of the battery cell, and the first exhaust passage is located on a side of the discharge hole in the thickness direction of the battery cell.

17. The battery cell according to any one of claims 1 to 16, wherein the battery cell further comprises an insulation pad, the insulation pad is disposed between the first wall and the cell, the insulation pad is provided with a second exhaust passage, the ventilation assembly is disposed between the first wall and the insulation pad, the second exhaust passage communicates with the ventilation assembly, and the ventilation film and the insulation pad are spaced apart from each other.

18. The battery cell according to claim 17, wherein the first exhaust passage and the second exhaust passage are staggered with each other.

19. The battery cell according to claim 17 or 18, wherein the through hole is disposed opposite the second exhaust passage to communicate with the second exhaust passage.

20. The battery cell according to claim 17 or 18, wherein the through hole is staggered with the second exhaust passage, and the through hole communicates with the second exhaust passage.

21. The battery cell according to any one of claims 1 to 20, wherein gas in the accommodating cavity is in communication with an external environment through the first exhaust passage, the connecting member, and the ventilation film.

22. The battery cell according to claim 21, wherein the housing is further provided with an explosion-proof valve, and under a condition that a pressure of the gas in the accommodating cavity is greater than a preset threshold, the gas in the accommodating cavity is discharged through the explosion-proof valve.

23. A battery, comprising the battery cell according to any one of claims 1 to 22.

24. An electric apparatus, comprising the battery cell according to any one of claims 1 to 22 or the battery according to claim 23.

25. An energy storage apparatus, comprising the battery cell according to any one of claims 1 to 22 or the battery according to claim 23.
